# EUROPEAN PATENT APPLICATION

(11) **EP 3 269 247 A1**
(43) Date of publication of application: **17.01.2018**
(21) Application number: 16758865.6
(22) Date of filing: 29.02.2016
(51) Int. Cl.: A01N 53/06, A01M 1/20, A01N 25/18, A01N 53/02, A01P 7/04

(54) **HEATING-TRANSPIRATION AQUEOUS-INSECTICIDE COMPOSITION AND HEATING TRANSPIRATION METHOD OF HEATING-TRANSPIRATION AQUEOUS-INSECTICIDE COMPOSITION**

(30) Priority: 05.03.2015 JP 2015043826; 08.06.2015 JP 2015115734
(71) Applicant: Dainihon Jochugiku Co., Ltd., Osaka 550-0001 (JP)
(72) Inventor: SUGIOKA Hiroki, Toyonaka-shi Osaka 561-0827 (JP); HIKITSUCHI Tomoyuki, Toyonaka-shi Osaka 561-0827 (JP); ONO Taiji, Toyonaka-shi Osaka 561-0827 (JP); WATANABE Tomoe, Toyonaka-shi Osaka 561-0827 (JP); KAWAJIRI Yumi, Toyonaka-shi Osaka 561-0827 (JP); ASAI Hiroshi, Toyonaka-shi Osaka 561-0827 (JP); NAKAYAMA Koji, Toyonaka-shi Osaka 561-0827 (JP)
(74) Representative: Hart-Davis, Jason
(86) International application number: PCT/JP2016/055978
(87) International publication number: WO 2016/140172

(57) **Abstract**

Provided is a water-based insecticidal composition to be vaporized and diffused by being heated for controlling mosquitoes having reduced susceptibility to a pyrethroid insecticidal component. The composition contains 0.1-3.0 mass% of the pyrethroid insecticidal component, 10-70 mass% of at least one glycol ether compound having a boiling point of 150-300°C as a susceptibility reduction-countering auxiliary agent for the pyrethroid insecticidal component, and water.

## Description

### TECHNICAL FIELD

The present invention relates to a water-based insecticidal composition to be vaporized and diffused by being heated, that is for controlling mosquitoes that have reduced susceptibility to pyrethroid insecticidal components, and a method for vaporizing and diffusing such a composition by heating.

### BACKGROUND ART

Among flying insect pest control products for controlling flying insect pests such as mosquitoes and the like are so-called "liquid mosquito killers," which are commercially available. Liquid mosquito killers utilize the technique of putting an absorbent wick in a chemical liquid containing an insecticidal component, allowing the chemical liquid to be absorbed and transported to the top portion of the absorbent wick, and heating the absorbent wick so that the insecticidal component is vaporized and diffused into the atmosphere. Typical insecticidal components for liquid mosquito killers are pyrethroid insecticidal components. Of pyrethroid insecticidal components, prallethrin, furamethrin, and the like have been most commonly used, but lately there has been a trend towards using newer components such as transfluthrin, metofluthrin, profluthrin, and the like, which have a higher insecticidal activity.

Among chemical liquids for use in liquid mosquito killers are kerosene-based formulations (referred to as "oil-based formulations") and water-based formulations. So far oil-based formulations have been used in most of globally available liquid mosquito killers. However, water-based formulations have advantages over oil-based formulations in terms of usefulness and effectiveness. Therefore, it is expected that the demand for water-based formulations will increasingly grow in future.

For example, Patent Document 1 and Patent Document 2 indicate that water-based formulations of insecticide may have a lower risk of catching fire and be more effective in killing insect pests than oil-based formulations of insecticide. These prior documents disclose, as surfactants capable of being vaporized and diffused, a variety of compounds such as polyoxyalkylene alkyl ethers, polyoxyalkylene phenyl ethers, polyoxyethylene fatty acid esters, polyol fatty acid partial esters, polyoxyethylene polyol fatty acid partial esters, fatty acid alkylolamides, and the like, and also indicate that the surfactants have the effect of enhancing the insect killing efficacy of pyrethroid insecticidal components.

Incidentally, insect pests, such as mosquitoes and the like, that have reduced susceptibility to pyrethroid insecticidal components have in recent years been observed everywhere in the world, and the control of such insect pests is a matter of great urgency. It is said that the addition of piperonyl butoxide is effective in controlling such insect pests if the activation of a metabolic enzyme is responsible for the reduction in susceptibility. No useful compound that can replace piperonyl butoxide has yet been proposed. In Patent Documents 1 and 2, insect killing efficacy tests were conducted for insect pests having normal susceptibility.

### CITATION LIST

### PATENT LITERATURE

Patent Document 1: Japanese Examined Patent Application Publication No. H07-74130
Patent Document 2: Japanese Examined Patent Application Publication No. H07-100641

### SUMMARY OF INVENTION

### TECHNICAL PROBLEM

Considering a current circumstance in which liquid mosquito killers are widely used as a means for controlling mosquitoes in homes, the present inventors have reviewed and extensively studied techniques applied to conventional flying insect pest control products to find that, of various surfactants, glycol ether compounds having a boiling point of 150-300°C are particularly effective in specifically controlling mosquitoes having reduced susceptibility to pyrethroid insecticidal components, and such an effect can be utilized as an auxiliary agent for countering the susceptibility reduction (hereinafter referred to as a "susceptibility reduction-countering auxiliary agent"). Based on this finding, the present invention has been made.

Specifically, it is an object of the present invention to provide: a water-based insecticidal composition to be vaporized and diffused by being heated, that contains a pyrethroid insecticidal component, and an auxiliary agent for countering a reduction in susceptibility to the pyrethroid insecticidal component, and is therefore effective in controlling mosquitoes having reduced susceptibility to the pyrethroid insecticidal component; and a method for vaporizing and diffusing the water-based insecticidal composition by heating.

### SOLUTION TO PROBLEM

To achieve the object, the present invention has the following aspects.
(1) A water-based insecticidal composition to be vaporized and diffused by being heated for controlling mosquitoes having reduced susceptibility to a pyrethroid insecticidal component, wherein
   the composition contains 0.1-3.0 mass% of the pyrethroid insecticidal component, 10-70 mass% of at least one glycol ether compound having a boiling point of 150-300°C as a susceptibility reduction-countering auxiliary agent for the pyrethroid insecticidal component, and water.
(2) The water-based insecticidal composition to be vaporized and diffused by being heated as set forth in (1), wherein
   the glycol ether compound has a boiling point of 200-260°C.
(3) The water-based insecticidal composition to be vaporized and diffused by being heated as set forth in (1) or (2), wherein
   the glycol ether compound is a diethylene glycol monoalkyl ether.
(4) The water-based insecticidal composition to be vaporized and diffused by being heated as set forth in (3), wherein
   the diethylene glycol monoalkyl ether is diethylene glycol monobutyl ether.
(5) The water-based insecticidal composition to be vaporized and diffused by being heated as set forth in any one of (1)-(4), wherein
   the pyrethroid insecticidal component is at least one selected from the group consisting of transfluthrin, metofluthrin, and profluthrin.
(6) The water-based insecticidal composition to be vaporized and diffused by being heated as set forth in (5), wherein
   the pyrethroid insecticidal component is transfluthrin.
(7) A method for vaporizing and diffusing the water-based insecticidal composition to be vaporized and diffused by being heated as set forth in any one of (1)-(6), by heating, comprising:
   immersing a portion of an absorbent wick in the water-based insecticidal composition so that the water-based insecticidal composition is absorbed and transported to a top portion of the absorbent wick, and heating the top portion to 60-130°C so that the water-based insecticidal composition is vaporized and diffused.
(8) The method as set forth in (7), wherein
   a raw material for the absorbent wick includes a polyester fiber and/or a polyamide fiber, or a porous ceramic.

### ADVANTAGEOUS EFFECTS OF INVENTION

The water-based insecticidal composition to be vaporized and diffused by being heated according to the present invention contains a pyrethroid insecticidal component, and a susceptibility reduction-countering auxiliary agent for the pyrethroid insecticidal component, and is effective in controlling mosquitoes having reduced susceptibility to the pyrethroid insecticidal component, and therefore, is highly useful. Furthermore, the method for vaporizing and diffusing the water-based insecticidal composition by heating is highly useful.

### DESCRIPTION OF EMBODIMENTS

A water-based insecticidal composition to be vaporized and diffused by being heated according to the present invention, and a method for vaporizing and diffusing the water-based insecticidal composition by heating, will now be described. Note that the present invention is not intended to be limited to embodiments or examples described below.

The water-based insecticidal composition to be vaporized and diffused by being heated according to the present invention contains 0.1-3.0 mass% of a pyrethroid insecticidal component. If the content of the pyrethroid insecticidal component is less than 0.1 mass%, the insect killing efficacy is likely to decrease. Meanwhile, if the content of the pyrethroid insecticidal component is more than 3.0 mass%, the properties of the water-based composition are likely to be impaired. Examples of the pyrethroid insecticidal component include transfluthrin, metofluthrin, profluthrin, empenthrin, allethrin, prallethrin, furamethrin, terallethrin, and the like. Of them, transfluthrin, metofluthrin, and profluthrin are preferable, more preferably transfluthrin, in terms of thermal vaporization and diffusion capability, insect killing efficacy, stability, and the like. The above pyrethroid insecticidal components may be used alone or in combination. If there are optical or geometrical isomers based on asymmetric carbon for the acid moiety or alcohol moiety of the pyrethroid insecticidal component, these pyrethroid insecticidal component isomers can also be used in the present invention.

A feature of the present invention is that, in addition to the pyrethroid insecticidal component, 10-70 mass% of at least one glycol ether compound having a boiling point of 150-300°C, preferably 200-260°C, is used as an auxiliary agent for countering a reduction in susceptibility to the pyrethroid insecticidal component. If the content of the glycol ether compound (susceptibility reduction-countering auxiliary agent) is less than 10 mass%, not only is it difficult to prepare a water-based formulation thereof, but also the effect of suppressing the reduction in insect killing efficacy is poor. Meanwhile, if the content of the glycol ether compound (susceptibility reduction-countering auxiliary agent) is more than 70 mass%, not only is the insect killing effect no longer enhanced, but also the risk of catching fire increases, and therefore, the advantage of being a water-based formulation is likely to be impaired.

Note that, in the background art, compounds that enhance the inherent insect killing efficacy of pyrethroids with respect to insect pests that are susceptible to pyrethroids, may be referred to as an "efficacy enhancer." As used herein, the term "susceptibility reduction-countering auxiliary agent" refers to a compound that suppresses a reduction in insect killing efficacy with respect to insect pests having reduced susceptibility, as distinct from conventional "efficacy enhancers." Although the action mechanisms of these substances have not been fully clarified, not all "efficacy enhancers" serve as a "susceptibility reduction-countering auxiliary agent."

A glycol ether compound that achieves the object of the present invention satisfies the following conditions: (1) it can dissolve a pyrethroid insecticidal component; (2) it can be vaporized and diffused by being heated; (3) when it is being vaporized and diffused by being heated, it mediates between the pyrethroid insecticidal component and water so that the ratio of the three components is maintained unchanged; and in addition to these three conditions, (4) it can act as a susceptibility reduction-countering auxiliary agent for the pyrethroid insecticidal component. Specific examples of such a glycol ether compound include diethylene glycol monoethyl ether (boiling point: 202°C), diethylene glycol monoisopropyl ether (boiling point: 207°C), diethylene glycol monobutyl ether (boiling point: 231°C), diethylene glycol monoisobutyl ether (boiling point: 220°C), diethylene glycol monohexyl ether (boiling point: 259°C), diethylene glycol mono2-ethylhexyl ether (boiling point: 272°C), diethylene glycol monophenyl ether (boiling point: 283°C), triethylene glycol monomethyl ether (boiling point: 249°C), propylene glycol mono-tertiary butyl ether (boiling point: 151°C), dipropylene glycol monomethyl ether (boiling point: 188°C), dipropylene glycol monopropyl ether (boiling point: 210°C), 3-methoxy-1,2-propanediol (boiling point: 220°C), and the like. Of them, diethylene glycol monoethyl ether, diethylene glycol monoisopropyl ether, diethylene glycol monobutyl ether, diethylene glycol monoisobutyl ether, and diethylene glycol monohexyl ether are preferable, more preferably diethylene glycol monobutyl ether. The above glycol ether compounds may be used alone or in combination.

The water-based insecticidal composition to be vaporized and diffused by being heated according to the present invention contains water in addition to the above components. Other various components may be added to the composition as long as they do not impair any feature of the present invention. For example, repellent components such as DEET, terpene compounds, natural essential oils, and aroma chemicals, antibacterial agents, antifungal agents, stabilizers such as dibutylhydroxytoluene (BHT), methyl parahydroxybenzoate, and the like, pH adjusting agents, coloring agents, deodorants such as tea extracts, tea leaf dry distilled solutions, and the like may be added as appropriate. During the preparation of the water-based insecticidal composition to be vaporized and diffused by being heated, lower alcohols such as ethanol, isopropanol, and the like, hydrocarbon solvents such as kerosene and the like, and ester or ether solvents may be used, as appropriate, in a small amount as long as the advantage of being a water-based formulation is not impaired. Furthermore, solubilizers and dispersants may be used as appropriate.

The water-based insecticidal composition to be vaporized and diffused by being heated according to the present invention thus prepared is placed in a container body equipped with an absorbent wick, and then applied to a flying insect pest control product (e.g., a liquid mosquito killer) that vaporizes and diffuses such a water-based insecticidal composition through the absorbent wick by heating. Specifically, the water-based insecticidal composition to be vaporized and diffused by being heated is accommodated in a chemical liquid container made of a plastic such as polypropylene, polyester, polyvinyl chloride, or the like. An absorbent wick is put into the water-based insecticidal composition to be vaporized and diffused by being heated, through a stopper. Thereafter, the water-based insecticidal composition to be vaporized and diffused by being heated in the container is transported to the top portion of the absorbent wick, and is heated to 60-130°C by a ring-shaped heat generator provided around the top portion to be vaporized and diffused into the atmosphere. The absorbent wick faces the heat generator with a space therebetween. Therefore, the desired surface temperature (e.g., 60-130°C) of the top portion of the absorbent wick is achieved by adjusting the heat generator to a higher temperature (e.g., 80-150°C). If the heating temperature of the water-based insecticidal composition to be vaporized and diffused by being heated is excessively high, the water-based insecticidal composition to be vaporized and diffused by being heated is likely to be quickly vaporized and diffused, or undergo pyrolysis or polymerization, leading to the production of a high-boiling-point substance on the surface of the absorbent wick, which may be accumulated to clog the absorbent wick. Meanwhile, if the heating temperature is excessively low, the water-based insecticidal composition to be vaporized and diffused by being heated has difficulty in vaporizing and diffusing, so that sufficient insect control performance cannot be achieved.

The absorbent wick is made of a raw material that is stable with respect to pyrethroid insecticidal components and can absorb aqueous solution by capillary action. Specifically, examples of the absorbent wick include, but are not limited to: those that are obtained by kneading, molding, and baking an inorganic material such as clay (kaolinite clay), mica, mullite, talc, perlite, diatomaceous earth, or the like together with an organic substance such as graphite, carboxymethyl cellulose, or the like as appropriate; plastic wicks made of polyester fibers, polyamide fibers, polypropylene fibers, or the like; porous ceramic wicks; and the like. Note that the absorbent wick may additionally contain colorants, preservatives, and antioxidants such as 4,4'-methylenebis(2-methyl-6-t-butylphenol), stearyl-β-(3,5-di-t-butyl-4-hydroxyphenyl)propionate, and the like, as appropriate.

The method for vaporizing and diffusing the water-based insecticidal composition of the present invention by heating, has practical insect killing efficacy, in indoor spaces such as living rooms, lounges, bedrooms, and the like, on not only strains that are susceptible to pyrethroids, but also strains that have reduced susceptibility, of mosquitoes such as Culex (Culex pipiens pallens, Culex tritaeniorhynchus, Culex pipiens quinquefasciatus, Culex pipiens molestus, etc.), Aedes (Aedes aegypti, Aedes albopictus, etc.), Chironomidae, and the like, and therefore, is considerably useful. Note that such an effect is particularly significant on mosquitoes, and is somewhat observed on flying insect pests such as houseflies, drain flies, phorid flies, horseflies, black flies, biting midges, and the like.

### Examples

Next, the water-based insecticidal composition to be vaporized and diffused by being heated according to the present invention, and the method for vaporizing and diffusing the water-based insecticidal composition by heating, will be described in greater detail by way of specific examples.

### (Example 1)

A water-based insecticidal composition to be vaporized and diffused by being heated according to Example 1 of the present invention was prepared by mixing 0.9 mass% of transfluthrin, 50 mass% of diethylene glycol monobutyl ether as a susceptibility reduction-countering auxiliary agent, 0.1 mass% of dibutylhydroxytoluene as a stabilizer, and 49 mass% of purified water (see Table 1).

Forty-five milliliters of the water-based insecticidal composition to be vaporized and diffused by being heated was placed in a plastic container, and an absorbent wick was loaded into the container through a stopper. Thereafter, the container was attached to a thermal vaporization/diffusion device (e.g., a device disclosed in Japanese Patent No. 2926172 or the like). Note that the absorbent wick was made of polyester fibers and in the shape of a round bar having a diameter of 7 mm and a length of 70 mm, and the temperature of a ring-shaped heat generator disposed around the top portion of the absorbent wick was adjusted to 130°C.

The thermal vaporization/diffusion device was placed at the center of a room (25 m³) having an area of 6 Jyos (Jyo is a Japanese unit of area: 1 Jyo is equal to approximately 1.6 m²) in Thailand, which is inhabited by Culex pipiens quinquefasciatus having reduced susceptibility to pyrethroid insecticidal components, and was used while an electric current was passed through the heat generator for 12 hours a day. For 60 days (approximately 700 hours), no mosquito biting was observed.

### (Examples 2-8 and Comparative Examples 1-6)

Water-based insecticidal compositions to be vaporized and diffused by being heated according to Examples 2-8 of the present invention were prepared in a manner similar to that for Example 1, and were loaded into respective thermal vaporization/diffusion devices that were the same as that used in Example 1, and were then tested to verify their insect killing efficacy. For comparison, water-based insecticidal compositions to be vaporized and diffused by being heated according to Comparative Examples 1-6, which do not fall within the scope of the present invention, were prepared. The components of the water-based insecticidal compositions to be vaporized and diffused by being heated and the materials for the absorbent wicks of Examples 1-8 and Comparative Examples 1-6 are shown in Table 1.

In all Examples 1-8, the water-based insecticidal compositions to be vaporized and diffused by being heated each contain a pyrethroid insecticidal component, a glycol ether compound (susceptibility reduction-countering auxiliary agent) having a boiling point of 150-300°C, and water in amounts that fall within respective ranges as defined herein. In contrast to this, in Comparative Examples 1 and 2, the water-based insecticidal compositions to be vaporized and diffused by being heated are each an oil-based formulation of an insecticidal composition that contains kerosene as a solvent. The specific gravities (approximately 0.77) of the insecticidal compositions of Comparative Examples 1 and 2 are smaller than those (approximately 1.0) of the water-based insecticidal compositions to be vaporized and diffused by being heated of Examples 1-8. Therefore, the amount of an insecticidal composition vaporized and diffused from each of the water-based formulations of Examples 1 and 2 is substantially the same as the amount of an insecticidal composition vaporized and diffused from each of the oil-based formulations of Comparative Examples 1 and 2, in terms of volume, however, the former is greater than the latter in terms of mass. Note that both the water-based formulations and the oil-based formulations are used for 60 days, and therefore, there is substantially no difference in the amount of the active component (pyrethroid insecticidal component) vaporized and diffused between Examples 1 and 2 and Comparative Examples 1 and 2. In Comparative Example 3, diethylene glycol monobenzyl ether, which has a boiling point of 302°C, was used. In Comparative Example 4, diacetin, which has a boiling point of 280°C, was used instead of glycol ether compounds. The amounts of these substances vaporized and diffused are smaller than the amount of the susceptibility reduction-countering auxiliary agent vaporized and diffused in each of Examples 1-8. Note that the substances used in Comparative Examples 3 and 4 are traditionally used as an "efficacy enhancer" which is effective in controlling susceptible strains. In Comparative Example 5, the content of the susceptibility reduction-countering auxiliary agent was excessively large. In Comparative Example 6, the content of the susceptibility reduction-countering auxiliary agent was excessively small. In Table 1, "diethylene glycol monobenzyl ether," which was used in Comparative Example 3, and "diacetin," which was used in Comparative Example 4, are not technically a susceptibility reduction-countering auxiliary agent as defined herein, but are shown in the column "susceptibility reduction-countering auxiliary agent" of Table 1 for the sake of convenience.

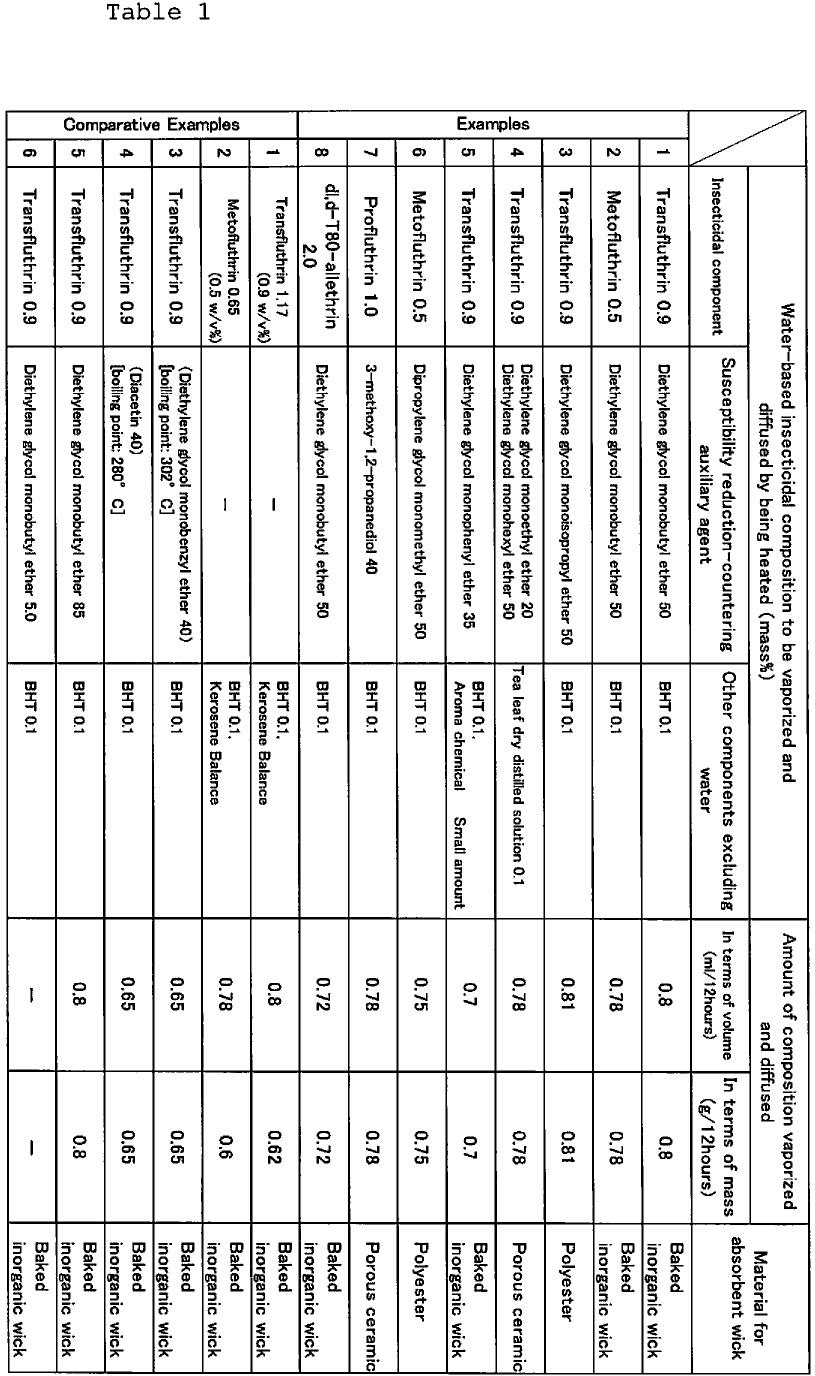

### <Test for Insect Killing Efficacy>

In order to verify the effectiveness of each water-based insecticidal composition to be vaporized and diffused by being heated, a test for insect killing efficacy was conducted as follows. Two plastic cylinders each having an inner diameter of 20 cm and a height of 43 cm were put on top of each other. Another cylinder having an inner diameter of 20 cm and a height of 20 cm (insects to be tested were to be placed), which is vertically partitioned by a 16-mesh metal mesh, was put on top of the stack of the two cylinders with a rubber gasket being interposed therebetween. Still another cylinder having the same inner diameter and a height of 20 cm was put on top of the third cylinder. The stack of the four cylinders was placed on a circular plate provided on a table with a rubber gasket being interposed between the cylinder stack and the circular plate. The circular plate had a 5-cm circular hole at the center thereof. A thermal vaporization/diffusion device to be tested was placed on the circular hole, and fumigation was performed through the passage of an electric current. After four hours of the passage of an electric current, approximately 20 adult female Aedes aegypti mosquitoes (a pyrethroid-susceptible Thai DMS strain or a Thai BS strain having reduced susceptibility) (insects to be tested) were released in the upper cylinder, and the number of tested insects which fell down to be flat on their back as time passed was counted to calculate the KT₅₀ value. After 20 minutes of exposure, all of the tested insects were collected. The fatality rate of the insects was investigated 24 hours later. The test results are shown in Table 2 below.

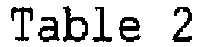

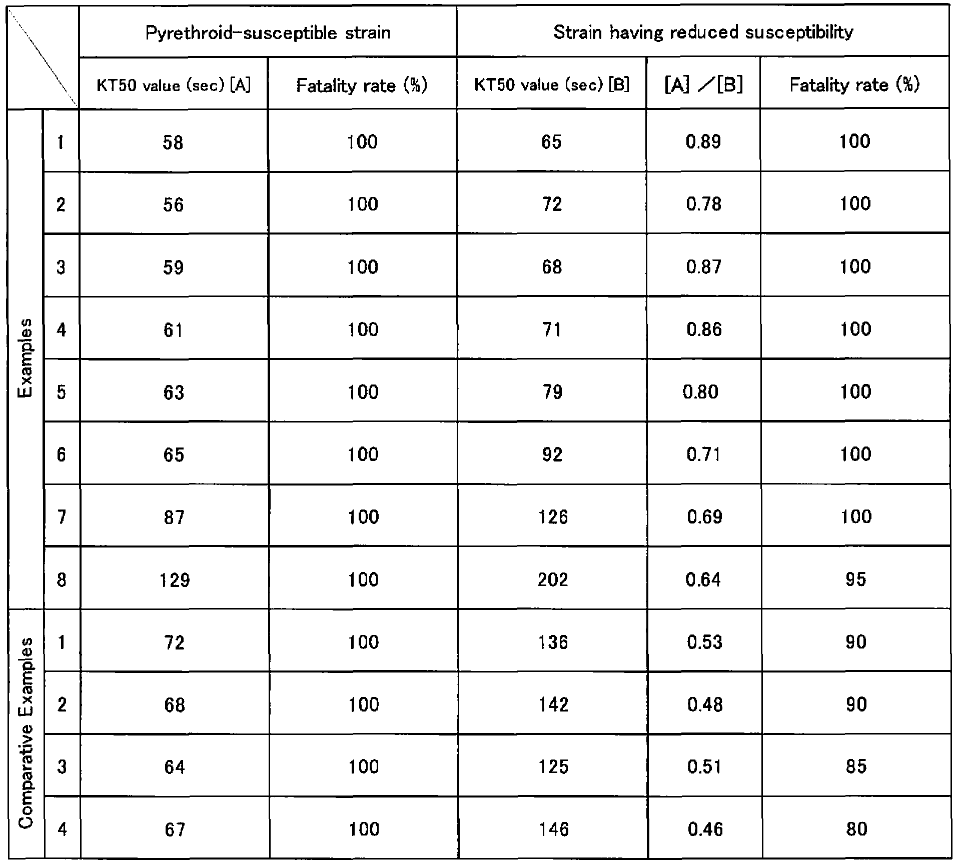

According to the test results, it was verified that the water-based insecticidal compositions to be vaporized and diffused by being heated according to Examples 1-8 of the present invention (i.e. water-based insecticidal compositions to be vaporized and diffused by being heated each containing: 0.1-3.0 mass% of a pyrethroid insecticidal component; 10-70 mass% of at least one glycol ether compound having a boiling point of 150-300°C as a susceptibility reduction-countering auxiliary agent for the pyrethroid insecticidal component; and water) had only a small decrease in insect killing efficacy on the Aedes aegypti strain having reduced susceptibility to pyrethroid insecticidal components, compared to when the compositions were applied to the pyrethroid-susceptible strain, and therefore, are considerably effective in controlling these mosquitoes. Here, as a result of comparison between Examples 1-4 and Examples 5-7, of the glycol ether compounds, diethylene glycol monoalkyl ether compounds which have a boiling point of 200-260°C are preferable, more preferably diethylene glycol monobutyl ether. As can be seen from Example 8, when transfluthrin, metofluthrin, or profluthrin was used as the pyrethroid insecticidal component, the object of the present invention was achieved. In particular, transfluthrin was highly useful. Furthermore, according to the results shown in Table 2, it was suggested that a fatality rate of 100% can be achieved even for mosquitoes having reduced susceptibility if the value of [A] / [B] is 0.6 or more, where [A] is the KT₅₀ value (sec) of mosquitoes susceptible to pyrethroid insecticidal components, and [B] is the KT₅₀ value (sec) of mosquitoes having reduced susceptibility to pyrethroid insecticidal components.

In contrast to this, it was observed that, in Comparative Examples 1 and 2, in which a kerosene-based (oil-based) formulation was used, the knockdown efficacy on the Aedes aegypti strain having reduced susceptibility to pyrethroid insecticidal components significantly decreased, compared to the pyrethroid-susceptible strain. Furthermore, it was observed that the compositions of Comparative Examples 3 and 4 were not as effective in controlling the Aedes aegypti strain having reduced susceptibility to pyrethroid insecticidal components as the water-based insecticidal composition to be vaporized and diffused by being heated according to the present invention, which contains a glycol ether compound. Thus, it was clarified that not all conventional "efficacy enhancers" serve as a "susceptibility reduction-countering auxiliary agent." Note that, in Comparative Example 5, in which more than 70 mass% of a susceptibility reduction-countering auxiliary agent was contained, the risk of catching fire increased, i.e. the advantage of being a water-based formulation was lost. In Comparative Example 6, in which the content of a susceptibility reduction-countering auxiliary agent was excessively small, a satisfactory water-based composition was not successfully formed, and therefore, the insect killing efficacy test was not conducted. Therefore, Table 2 has no test results of Comparative Examples 5 and 6.

### (Example 9 and Comparative Example 7)

A water-based insecticidal composition to be vaporized and diffused by being heated according to Example 9 of the present invention was prepared by mixing 1.3 mass% of transfluthrin, 50 mass% of diethylene glycol monobutyl ether as a susceptibility reduction-countering auxiliary agent, 0.1 mass% of dibutylhydroxytoluene as a stabilizer, and 48.6 mass% of purified water in a manner similar to that for Example 1. The water-based insecticidal composition to be vaporized and diffused by being heated of Example 9 is for long-term use (90 days). Forty-five milliliters of the water-based insecticidal composition to be vaporized and diffused by being heated was placed in a plastic container, and an absorbent wick was loaded into the container through a stopper. Thereafter, the container was attached to a thermal vaporization/diffusion device. Note that the absorbent wick was a ceramic wick that was obtained by kneading an inorganic powder such as clay, mica, or the like with an organic substance such as graphite or the like, molding the mixture into the shape of a round bar having a diameter of 7 mm and a length of 70 mm, and baking the molded product. The temperature of a ring-shaped heat generator disposed around the top portion of the absorbent wick was adjusted to 128°C.

Meanwhile, an oil-based formulation of an insecticidal composition to be vaporized and diffused by being heated according to Comparative Example 7 was prepared in a manner similar to that for Example 9, except that 1.69 mass% (1.3 w/v%) of transfluthrin was dissolved in kerosene, and was used in a thermal vaporization/diffusion device similar to that for Example 9.

The thermal vaporization/diffusion devices of Example 9 and Comparative Example 7 were tested for their insect killing efficacy in the field as follows.

### <Field Test for Insect Killing Efficacy>

Kraft paper was laid on the floor of a non-ventilated 6-Jyo lounge (25 m³: 2.7 m × 3.6 m × 2.55 m (height)), and a thermal vaporization/diffusion device to be tested was placed at the center of the floor. At the beginning of the passage of an electrical current, approximately 100 adult female Aedes aegypti mosquitoes (a pyrethroid-susceptible Thai DMS strain or a Thai BS strain having reduced susceptibility) (insects to be tested) were released, and the number of tested insects that fell down to be flat on their back as time passed was counted to calculate the KT₅₀ value. After two hours of exposure, all of the tested insects were transferred to a clean plastic container, and fed with absorbent cotton impregnated with sugar water. The container was maintained at approximately 25°C. The fatality rate of the insects was investigated 24 hours later. The test results are shown in Table 3 below.

**Table 3**

| | | Pyrethroid-susceptible strain | | Strain having reduced susceptibility | |
|---|---|---|---|---|---|
| | | KT50 value (min) | Fatality rate (%) | KT50 value (min) | Fatality rate (%) |
| Examples 9 | Water-based | 15.3 | 100 | 46.7 | 90.6 |
| Comparative Examples 7 | Oil-based | 14.4 | 100 | 87.1 | 54.4 |

In the field test for insect killing efficacy, it was also observed that when a susceptibility reduction-countering auxiliary agent was added, the water-based formulation of the insecticidal composition to be vaporized and diffused by being heated according to Example 9 was particularly more effective in controlling the Aedes aegypti strain having reduced susceptibility to pyrethroid insecticidal components than was the oil-based formulation of the composition according to Comparative Example 7.

### INDUSTRIAL APPLICABILITY

The present invention can be used in products for controlling insect pests so as to protect humans and pets, and can also be used for other purposes, such as insecticidal, acaricidal, antibacterial, antifungal, deodorizing, and antibromic applications.

## Claims

1. A water-based insecticidal composition to be vaporized and diffused by being heated for controlling mosquitoes having reduced susceptibility to a pyrethroid insecticidal component, **characterized in that**
the composition contains 0.1-3.0 mass% of the pyrethroid insecticidal component, 10-70 mass% of at least one glycol ether compound having a boiling point of 150-300°C as a susceptibility reduction-countering auxiliary agent for the pyrethroid insecticidal component, and water.

2. The water-based insecticidal composition to be vaporized and diffused by being heated of claim 1, **characterized in that**
the glycol ether compound has a boiling point of 200-260°C.

3. The water-based insecticidal composition to be vaporized and diffused by being heated of claim 1 or 2, **characterized in that**
the glycol ether compound is a diethylene glycol monoalkyl ether.

4. The water-based insecticidal composition to be vaporized and diffused by being heated of claim 3, **characterized in that**
the diethylene glycol monoalkyl ether is diethylene glycol monobutyl ether.

5. The water-based insecticidal composition to be vaporized and diffused by being heated of any one of claims 1-4, **characterized in that**
the pyrethroid insecticidal component is at least one selected from the group consisting of transfluthrin, metofluthrin, and profluthrin.

6. The water-based insecticidal composition to be vaporized and diffused by being heated of claim 5, **characterized in that**
the pyrethroid insecticidal component is transfluthrin.

7. A method for vaporizing and diffusing the water-based insecticidal composition to be vaporized and diffused by being heated of any one of claims 1-6, by heating, comprising:
immersing a portion of an absorbent wick in the water-based insecticidal composition so that the water-based insecticidal composition is absorbed and transported to a top portion of the absorbent wick, and heating the top portion to 60-130°C so that the water-based insecticidal composition is vaporized and diffused.

8. The method of claim 7, **characterized in that**
a raw material for the absorbent wick includes a polyester fiber and/or a polyamide fiber, or a porous ceramic.
